# EUROPEAN PATENT SPECIFICATION

(11) **EP 1 205 338 B1**
(45) Date of publication and mention of the grant of the patent: **21.01.2009**
(21) Application number: 01204053.1
(22) Date of filing: 24.10.2001
(51) Int. Cl.: B60K 6/365, B60K 17/28, B60W 10/08, B60K 6/445, F02D 31/00, F02D 41/02, F02D 41/40

(54) **Self-propelled vehicle with control elements for regulating engine speed, vehicle ground speed and power take-off (PTO) speed**
Fahrzeug mit Eigenantrieb sowie mit einer Steuervorrichtung zum Einstellen der Drehzahl eines Motors und eines Zapfwellenantriebs sowie der Fahrzeuggeschwindigkeit
Véhicule automoteur avec des appareils de commande pour régler les vitesses d'un moteur, un véhicule, et une prise de force

(30) Priority: 09.11.2000 IT BO000648
(43) Date of publication of application: 15.05.2002
(73) Proprietor: CNH Italia S.p.A., 41100 Modena (IT)
(72) Inventor: Bordini, Giorgio, 38003 Santa Cruz de Tenerife, Canarias (ES)
(74) Representative: Vandenbroucke, Alberic

(56) References cited:
- EP-A- 0 805 059
- DE-A1- 4 417 335
- DE-A1- 19 749 074
- FR-A- 2 781 727
- US-A- 4 663 713
- US-A- 5 947 855
- US-A- 6 138 069

## Description

The present invention relates to a self-propelled vehicle.

As is known, self-propelled vehicles, particularly when comprising propelling means of the hybrid type, such as an electro-mechanical transmission, are equipped with a single pedal-, lever- or pedal-and-lever-operated device for regulating the travelling speed of the vehicle according to the gear ratio set in the transmission.

In the case of a diesel internal combustion engine, in particular, fuel injection can be governed to obtain the best conditions in terms of specific consumption, noise level, etc.

All this, however, fails to take into account that a PTO commonly is drivingly connected to the engine; the PTO being the device by which the vehicle supplies power externally towards one or other implement by means of a rotary shaft. When connecting the PTO, in fact, the operator must also select its rotational speed, which is normally set to 540, 750 or 1000 rpm, depending on the type and size of the implement attached to the PTO.

Consequently, since the PTO is connected mechanically to the output shaft of the internal combustion engine, a variation in the rotational speed of the drive shaft to adapt it to the best PTO conditions also results in a variation of the travelling speed of the vehicle, which is obviously not desired.

US-A-6.138.069 shows a vehicle having an internal combustion engine of which the mechanical output is fully converted into hydraulic power. A first hydraulic pump/motor unit is operable to drive the wheels of the vehicle whereas a second hydraulic pump/motor unit is operable to drive an attachment. A controller operates on inputs from a variety of manual controls from the operator to steer both the speed of the attachment (by controlling the rotational speed of the internal combustion engine) and the travel speed of the vehicle (by controlling the setting of the second hydraulic pump/motor unit). Although the arrangement offers the possibility to select a constant drive speed for the attachment, it nevertheless has the disadvantage that, under such a condition, the operator no longer can use the conventional foot throttle for changing the travel speed of the vehicle.

DE 19749 074 A1 discloses a self propelled vehicle comprising an internal combustion engine, two electrical machines, a planetary gear train dividing/combining the power supplied by said internal combustion engine and supplied drawn by said electrical machines, a central control unit, a device coupled to the control unit an operable to control the travelling speed of the vehicle by controlling the output speed of the internal combustion engine in combination with the output speed of the electric machines, and a PTO directly coupled to an output shaft of the internal combustion engine through a clutch.

It is proposed to separate the speed of the vehicle from that of the drive shaft connected directly to the PTO. This of course calls for a power unit permitting internal gear ratio adjustment to separate the speed of the internal combustion engine from that of the vehicle, and so obtain both the required PTO and vehicle speeds.

In this case, the system continues to provide the required vehicle travelling speed, but at the expense of minimum consumption, low noise, etc.

It is therefore an object of the present invention to provide a self-propelled vehicle, as defined in claim 1.

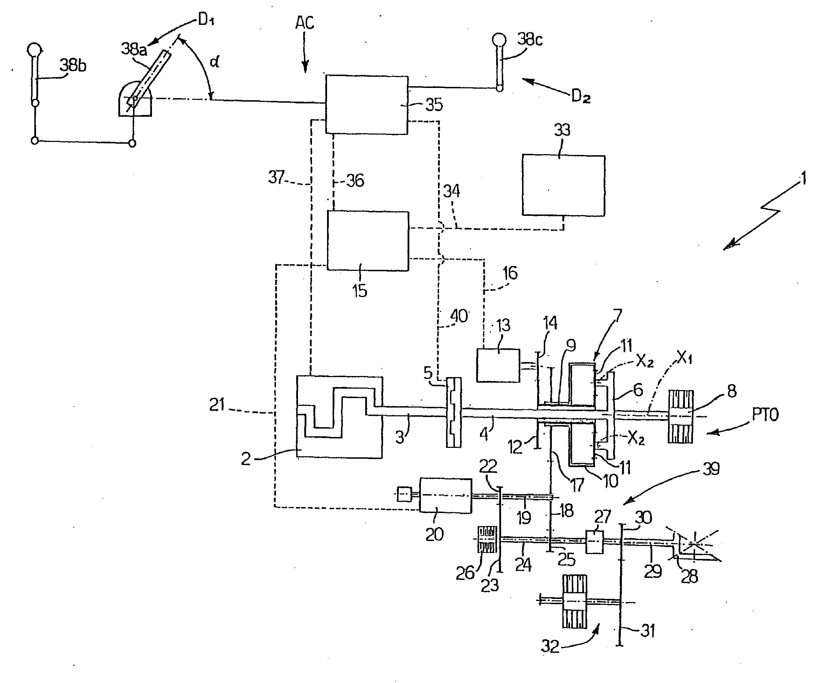

A non-limiting embodiment of the present invention will be described by way of example with reference to the accompanying drawing, which shows a simplified overall diagram of the power unit of a self-propelled vehicle comprising the device according to the present invention.

Number 1 in the accompanying drawing indicates as a whole a power unit of a self-propelled vehicle. Unit 1 comprises an internal combustion engine 2, in particular a diesel engine, for supplying mechanical power to a first propeller shaft 3, which is connected mechanically to a second propeller shaft 4 by a torque-limiting device 5 for connecting/disconnecting shaft 3 mechanically to/from shaft 4.

At the distal end of device 5, second shaft 4 terminates in a planet carrier 6 of an epi-cyclic gear train 7, and supplies part of the power to a clutch 8 of a PTO (not shown).

In addition to planet carrier 6, epi-cyclic gear train 7 also comprises a sun gear 9, a ring gear 10, and a number of planet gears 11. Planet carrier 6 is rotated by internal combustion engine 2 in a conventional manner about an axis X1, while planet gears 11 are rotated about axes X2, parallel with axis X1, as described in detail later on.

Sun gear 9 is integral with a gear 12 for transmitting power to, or receiving power from, an electric machine 13 via a gear 14 meshing with gear 12. Depending on the operating conditions of power unit 1, electric machine 13 acts either as a generator or as a motor (see below). Electric machine 13 is connected electrically to a power converter 15 over an electric line 16.

Ring gear 10 of gear train 7 is integral with a gear 17 meshing with an idle gear 18 provided on a shaft 19 of a further electric machine 20, which is also connected electrically to converter 15 over an electric line 21 and, depending on the operating conditions of unit 1, also acts as a generator or motor (see below).

Shaft 19 further is provided with a gear 22, fixedly connected thereto and meshing with a gear 23 fitted to a shaft 24. Shaft 24 fixedly supports a gear 25 meshing with idle gear 18. At one end of shaft 24, a brake 26 is provided, whereas at the other end conveniently, though not necessarily, a dual-ratio transmission 27 may be fitted for transmitting power to a differential 28 connected to the rear wheels (not shown) of the vehicle.

A shaft 29 extends between transmission 27 and differential 28, and is fitted with a gear 30 meshing with a gear 31 forming part of a device 32 for transmitting power to the front axle of the vehicle.

An electric-energy storage device 33, such as a set of batteries, is connected electrically to converter 15 over an electric line 34.

All the operations performed by unit 1 are controlled by an electronic central control unit 35 connected electrically to converter 15 and engine 2 over respective electric lines 36, 37.

The output speed of unit 1 is selected by the operator by means of a control pedal 38a or lever 38b. In other words, vehicle speed is selected by the operator by selecting a given tilt angle α of pedal 38a or lever 38b.

Normally, when power is drawn solely from engine 2 and machine 13 acts as a motor, machine 20 acts as a generator, and vice versa. Which machine 13 or 20 is to act as a motor and which one as a generator is determined by central control unit 35 acting on converter 15. Only in a so called "over-boosting" situation, both electric machines 13, 20 act as motors, or electric machine 13 acts as a motor and no power is drawn by electric machine 20.

Gear train 7 and gears 12, 14, 17, 18, 22, 23 and 25 define a device 39 for dividing/combining the power supplied by engine 2 and supplied/drawn by machines 13, 20. More specifically, the mechanical power stream is first divided into two streams. One of these is converted from a mechanical to an electric power stream which can be manipulated easily by controlling torque factors and the rotational speed of the drive shaft. Obviously, for a given power, increasing torque automatically reduces the rotational speed of the drive shaft, and vice versa, so that the product of the two remains constant. Manipulating one power stream, however, automatically affects the other. The torques supplied in the mechanical and electric power streams are interrelated, in the sense that reducing the torque factor of one stream also changes the torque of the other. The sum of the two torques, however, in each case is the torque value to be transmitted to the wheels to move the vehicle.

In other words, if P1 is the power first converted to electric power and then back to mechanical power, and P2 the power that remains mechanical at all times, the sum of P1 and P2 is the traction power transmitted. Consequently, manipulating power P1 is tantamount to also manipulating power P2, i.e. by regulating power P1 electrically, it is also possible to regulate unconverted mechanical power P2.

A detailed description of the operation of unit 1 can be found in the post published Italian Patent Application BO2000A000607 filed by the present Applicant.

In short, mechanical power is processed by unit 1 as follows:
- the mechanical power is divided into two streams;
- a first mechanical stream is converted into an electric stream which is manipulated according to the required working conditions of the power unit; and
- the electric power is converted back to mechanical and is combined with the second mechanical stream which meanwhile has been conditioned for balance by the first stream.

The object of the present invention is a self propelled vehicle with a control device AC for controlling the working conditions of unit 1, and which comprises two separate devices. A first device D1, in turn comprising pedal 38a and lever 38b, is operable to only controlling the travelling speed of the vehicle powered by unit 1. A second device D2, in turn comprising a control lever 38c, is operable to set the rotational speed of shaft 3, and hence the rotational speed of the PTO, by means of a command signal entered in and processed by central control unit 35.

The commands imparted by first device D1 via pedal 38a or lever 38b serve solely to control the travelling speed of the vehicle. Device D1 comprises an electric angle transducer (not shown) and directly controls the speed of electric machines 13, 20, which, together with the rotational speed of shaft 3, ensure the required travelling speed of the vehicle as described in detail in the already mentioned post published Italian Patent Application BO2000A000607. Device D1 is therefore calibrated in km/h.

As already stated, a lever 38b, forming part of device D1, is electrically parallel with pedal 38a, and has a mechanical position memory so that the travelling speed of the vehicle, which is constant for each position of lever 38b, can be pre-set with no need for continual position control of pedal 38a, which is of a spring-return type for added operator comfort. Of the two signals transmitted by pedal 38a and lever 38b, priority is assigned by the electronic program processed by central control unit 35, which may, for example, privilege the highest one of the two set values.

One aspect of the present invention which should be stressed is that there is no direct relationship between the signal of device D1 and the rotational speed of output shaft 3 of engine 2.

Second device D2 comprises a lever 38c, and provides for setting the rotational speed of shaft 3 and, therefore, of the PTO. As already mentioned, the rotational speed of the PTO must be selected around standardised reference values, such as 540, 750 and 1000 rpm, depending on the type and size of the implements to be powered by the vehicle, in particular a tractor, in a manner such that the implements operate correctly.

The main object of the present invention is therefore to provide for direct control of the speed of engine 2 when the PTO is connected, with priority over the electronic control of the speed of the vehicle by device D1.

For this purpose, the present invention proposes to provide a second command by means of lever 38c of device D2, which generates a proportional electric signal and which is only enabled when the PTO is connected mechanically and therefore when clutch 8 of the PTO is activated. The second command acts on an actuator (not shown) controlling the injection pump of engine 2, so as to establish a direct relationship between the tilt of lever 38c and the speed of engine 2, and at the same time determines the rotational speed of the PTO.

When the PTO is connected, device D2 therefore functions in the same way as a conventional mechanical accelerator control, and the electronic control of the actuator of the engine injection pump functions as a conventional regulator. That is, the electronic control adapts the injection pump setting to compensate the speed of engine 2 to take account of variations in the resisting load of the PTO, so as to ensure the predetermined PTO speed (540, 750 or 100 rpm).

The travel of lever 38c of device D2 may be calibrated in PTO speed ranges, e.g. the three speed values indicated above.

Since operation of the PTO normally results in an increase in the rotational speed of shaft 3, electric machines 13, 20 provide for redistributing the speeds in accordance with the command coming from the device D1. The command signal from device D2, however, must obviously have priority over that of device D1.

Priority of the second command by device D2 over that of device D1 could give rise to situations in which the power output of engine 2 is greater or less than the total power actually required by the vehicle wheels and PTO. In an over-power situation, engine 2 would operate below maximum torque, thus increasing consumption and noise level, as on conventional vehicles; whereas, in an under-power situation, given the maximum speed limitation of engine 2, the vehicle would have to travel at a lower speed than the device D1 setting until a balance is reached between the total power transmitted (traction and PTO) and the power supplied by the engine 2 according to the command of device D2.

It should be pointed out that, on current vehicles, on the other hand, engine speed would fall gradually until the engine eventually stops, unless the operator would downshift through one or more gears.

Clearly, changes may be made to the device as described and illustrated herein without, however, departing from the scope of the present invention.

## Claims

1. A self-propelled vehicle comprising :
- an internal combustion engine (2);
- two electric machines (13, 20);
- a planetary gear train (7) dividing/combining the power supplied by said internal combustion engine (2) and supplied/drawn by said electric machines (13, 20);
- a central control unit (35);
- a first device (D1) coupled to the control unit (35) and operable to control the travelling speed of the vehicle by selectively controlling either the output speed of the internal combustion engine (2) in combination with the speed of said electric machines (13, 20) or solely the speed of said electric machines (13, 20);
- a second device (D2) coupled to the control unit (35), separate from the first device (D1) and operable solely to control the output speed of the internal combustion engine (2); and
- a PTO directly coupled to an output shaft (3) of the internal combustion engine through a clutch (8); engagement of said clutch (8) automatically disabling any control of the output speed of the internal combustion engine (2) by the control unit (35) on the basis of a signal received from said first device (D1).

2. A vehicle according to claim 1, **characterized in that** said second device (D2) also controls the rotational speed of the PTO.

3. A vehicle according to claim 1 or 2, **characterized in that** the operating conditions of said second device (D2) affect the operating conditions of said first device (D1).

4. A vehicle according to any of the preceding claims **characterized in that** a command from said second device (D2) has priority over the speed of said engine (2) set by an operator by means of said first device (D1).

5. A vehicle according to any of the preceding claims, **characterized in that** said electric machines (13, 20) may operate both as generator or as motor.

6. A vehicle according to any of the preceding claims, **characterized in that** said second device (D2) is only enabled when the PTO clutch (8) is activated.

## Patentansprüche

1. Selbstfahrendes Fahrzeug mit:
- einem Verbrennungsmotor (2);
- zwei elektrischen Maschinen (13, 20);
- einem Planetengetriebe-Strang (7), der die von dem Verbrennungsmotor (2) gelieferte und von den elektrischen Maschinen (13, 20) gelieferte/abgenommene Leistung aufteilt/kombiniert;
- einer zentralen Steuereinheit (35);
- einer ersten Einrichtung (D1), die mit der Steuereinheit (35) gekoppelt und betreibbar ist, um die Fahrgeschwindigkeit des Fahrzeuges durch selektives Steuern entweder der Ausgangsdrehzahl des Verbrennungsmotors (2) in Kombination mit der Drehzahl der elektrischen Maschinen (13, 20) oder ausschließlich der Drehzahl der elektrischen Maschinen (13, 20) zu steuern;
- einer zweiten Einrichtung (D2), die mit der Steuereinheit (35) getrennt von der ersten Einrichtung (D1) gekoppelt und betreibbar ist, um ausschließlich die Ausgangsdrehzahl des Verbrennungsmotors (2) zu steuern; und
- einem Zapfwellenantrieb, der direkt mit einer Ausgangswelle (3) des Verbrennungsmotors über eine Kupplung (8) gekoppelt ist; wobei ein Einkuppeln der Kupplung (8) automatisch jede Steuerung der Ausgangsdrehzahl des Verbrennungsmotors (2) durch die Steuereinheit (35) auf der Grundlage eines von der ersten Einrichtung (D1) empfangenen Signals unwirksam macht.

2. Fahrzeug nach Anspruch 1, **dadurch gekennzeichnet, dass** die zweite Einrichtung (D2) außerdem die Drehgeschwindigkeit des Zapfwellenantriebs steuert.

3. Fahrzeug nach Anspruch 1 oder 2, **dadurch gekennzeichnet, dass** die Betriebsbedingungen der zweiten Einrichtung (D2) die Betriebsbedingungen der ersten Einrichtung (D1) beeinflussen.

4. Fahrzeug nach einem der vorhergehenden Ansprüche, **dadurch gekennzeichnet, dass** ein Befehl von der zweiten Einrichtung (D2) eine Priorität gegenüber der Drehzahl des Motors hat, die durch einen Fahrer mit Hilfe der ersten Einrichtung (D1) eingestellt ist.

5. Fahrzeug nach einem der vorhergehenden Ansprüche, **dadurch gekennzeichnet, dass** die elektrischen Maschinen (13, 20) sowohl als Generator oder auch als Motor arbeiten können.

6. Fahrzeug nach einem der vorhergehenden Ansprüche, **dadurch gekennzeichnet, dass** die zweite Einrichtung (D2) lediglich dann freigegeben wird, wenn die Zapfwellen-Kupplung (8) aktiviert ist.

## Revendications

1. Véhicule automoteur comprenant :
- un moteur à combustion interne (2),
- deux machines électriques (13, 20),
- un train d'engrenages planétaires (7) divisant/associant la puissance fournie par ledit moteur à combustion interne (2) et fournie/extraite par lesdites machines électriques (13, 20),
- une unité de commande centrale (35),
- un premier appareil (D1) couplé à l'unité de commande (35) et pouvant fonctionner pour commander la vitesse de déplacement du véhicule en commandant sélectivement la vitesse de sortie du moteur à combustion interne (2) en association avec la vitesse des dites machines électriques (13, 20) ou uniquement la vitesse des dites machines électriques (13, 20),
- un second appareil (D2) couplé à l'unité de commande (35), indépendant vis-à-vis du premier appareil (D1) et pouvant fonctionner uniquement pour commander la vitesse du moteur à combustion interne (2), et
- un PTO directement couplé à un arbre de sortie (3) du moteur à combustion interne par l'intermédiaire d'un embrayage (8), l'enclenchement dudit embrayage (8) désactivant automatiquement toute commande de vitesse de sortie du moteur à combustion interne (2) par l'unité de commande (35) basée sur un signal reçu dudit premier appareil (D1).

2. Véhicule selon la revendication 1, **caractérisé en ce que** ledit second appareil (D2) commande également la vitesse de rotation du PTO.

3. Véhicule selon la revendication 1 ou 2, **caractérisé en ce que** les conditions de fonctionnement dudit second appareil (D2) affectent les conditions de fonctionnement dudit premier appareil (D1).

4. Véhicule selon l'une quelconque des revendications précédentes, **caractérisé en ce qu'**une commande provenant dudit second appareil (D2) a une priorité sur la vitesse dudit moteur (2) fixée par un conducteur au moyen dudit premier appareil (D1).

5. Véhicule selon l'une quelconque des revendications précédentes, **caractérisé en ce que** lesdites machines électriques (13, 20) peuvent fonctionner à la fois comme un générateur ou comme un moteur.

6. Véhicule selon l'une quelconque des revendications précédentes, **caractérisé en ce que** ledit second appareil (D2) est activé uniquement si l'embrayage du PTO (8) est actionné.
